# EUROPEAN PATENT SPECIFICATION

(11) **EP 2 787 409 B1**
(45) Date of publication and mention of the grant of the patent: **09.11.2016**
(21) Application number: 14161934.6
(22) Date of filing: 27.03.2014
(51) Int. Cl.: G05D 7/01, F16K 17/00

(54) **A fluid flow rate limiting valve, in particular for manipulators**
Flüssigkeitsdurchflussmengenbegrenzungsventil, insbesondere für Manipulatoren
Soupape de limitation de débit de fluide, en particulier pour manipulateurs

(30) Priority: 03.04.2013 IT VR20130079
(43) Date of publication of application: 08.10.2014
(73) Proprietor: ATIS S.r.l., 38017 Mezzolombardo (Trento) (IT)
(72) Inventor: Pancheri, Fulvio Italo, 38020 Livo (Trento) (IT)
(74) Representative: Lissandrini, Marco

(56) References cited:
- EP-A1- 2 006 587
- WO-A1-2011/089006
- CN-A- 102 506 209
- US-A- 3 122 162
- US-A1- 2005 211 303

## Description

This invention relates to a fluid flow rate limiting valve. Preferably, the valve is used on mechanical load manipulators .

As is known, handling devices help an operator to manually move objects (usually weighing between around 5 kg and 500 kg) in space while avoiding effort by the operator. In particular, handling devices allow the movement of offset loads, in any direction without constraints and with extreme freedom.

Generally, a manipulator comprises a support base, preferably fixed to the ground and shaped like a column, and at least one mechanical arm rotatably mounted on the support base. More specifically, the mechanical arm is movable by rotation about two axes, respectively vertical (passing through the column-like support base) and horizontally, for lifting and lowering the loads. Moreover, the loadng manipulator comprises a loading portion connected to the mechanical arm and configured to grip and support an object to be moved. It should be noted that in addition to manipulators supported by a column fixed to the ground, there are manipulators with a column on a self-supporting base, a column on a trolley-mounted base, a fixed pendant column and pendant column slidable on twin rails.

Each manipulator also comprises a balancing actuator, typically of the pneumatic type with single acting cylinder and piston. More in detail, the balancing actuator is connected to and interposed between the mechanical arm and the support base, in such a way that an end of the cylinder is hinged to the support base, whilst an end of the piston rod is hinged to the mechanical arm. It should be noted that the balancing actuator is interposed between the mechanical arm and the support base; in this way, the piston moves about the horizontal axis of rotation of the mechanical arm, that is to say, about the axis which lifts and lowers the arm and, therefore, lifts and lowers the load to be manipulated. Pressurised fluid, typically air, is sent inside the cylinder until a pressure value is reached such as to cause a movement of the piston, and, therefore, of the arm, and thereby balance the weight of the loading portion. The latter comprises a holding unit which can be grasped by an operator for shifting the loading portion in space. In use, the operator, having positioned the object on the loading portion, manually moves the loading portion depending on specific requirements, without having to manually hold the offset load.

In the majority of manipulators currently on the market, the balancing actuator balances the total weight bearing down on the mechanical arm and which is given by the sum of the weight of the loading portion and the weight of the object loaded. Thus, in order to lift or lower the object loaded, the operator must impart a force on the loading portion, in such a way as to break the equilibrium and thus induce the upwards or downwards movement of the mechanical arm, starting the lifting or lowering of the object loaded.

The start of the upwards or downwards movement of the mechanical arm as a result of the force induced by the operator determines a start of the sliding of the piston in the cylinder which is transmitted as a pressure signal inside the fluid present in the actuator. A control unit measures the pressure signal and controls a regulating system designed to keep a constant pressure inside the cylinder; more specifically, the regulating system allows the inflow or outflow of fluid into/out of the cylinder, depending on whether the operator has imparted a upwards or downwards force. For example, if the operator imparts a force in a downwards direction, the piston will move in the cylinder compressing the fluid and, therefore, increasing the pressure; in this case, the regulating system activates to discharge the fluid from the cylinder and restore the pressure value initially set. Vice versa, if the operator imparts a force in an upwards direction, the piston will move in the cylinder expanding the fluid and, therefore, reducing the pressure; in this case, the regulating system activates to send fluid in the cylinder to restore the pressure value initially set. To avoid sudden movements of the mechanical arm following abrupt operations by the operator, for example fast lifting or releasing of the load which would cause the mechanical arm to strike or crush the operator, the regulating systems comprise a valve for limiting the flow rate of the fluid entering or leaving the cylinder of the balancing actuator. More in detail, a flow rate limiting valve acts on the fluid in such a way as to limit the speed and, consequently, the flow rate.

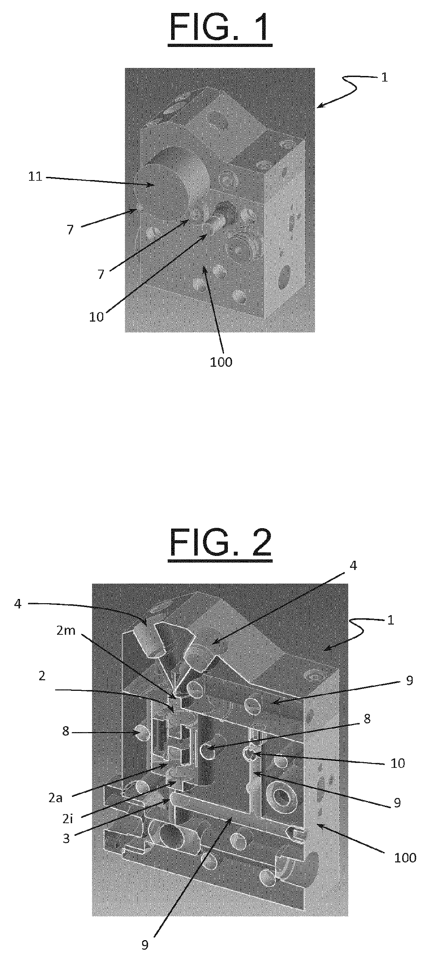

A limiting valve according to the prior art is illustrated in Figures 1A and 1B.

With reference to Figure 1A, the limiting valve comprises a shutter 200 interposed between a pair of springs 201, 202 designed to make it floating inside a conduit for delivery/discharge of fluid into/out of the cylinder (depending on operations performed by the operator and, therefore, the direction of flow). The shutter 200 is immersed in the flow of fluid and is equipped with a plurality of perimeter gaps 203 positioned along the perimeter of the shutter, which are passed through by the fluid. The gaps have a transversal section of predetermined size and there are a predetermined quantity as a function of the load which must be manipulated. More specifically, in addition to the perimeter gaps 203, there is a central gap 204.

The operation of the flow rate limiting valves according to the prior art is as follows. In the absence of sudden movements of the load, the fluid flows normally through the gaps 203, 204 into/out of the cylinder, depending on the operations performed by the operator; in that case, the shutter 200 remains in a position of substantial equilibrium due to the force exerted by the springs 201, 202. If the operator performs a sudden operation, for example a fast lifting or releasing of the load, the regulating system will vary the pressure in the cylinder, quickly sending fluid into the cylinder. The fluid will therefore pass through the gaps 203, 204 at very high speeds, incurring head losses across the shutter, which will cause an increase in pressure such as to overcome the force of the springs and move the shutter until it abuts an inner wall of the delivery/discharge conduit, closing the perimeter openings 203. In that configuration, the central gap 204 remains open, and is positioned in front of a conduit opening. In this way, a minimum flow of fluid is allowed through the central opening 204, so as to allow a slow movement of the piston of the balancing actuator and, therefore, of the mechanical arm.

US3122162 discloses a flow control device with a valve stem having a longitudinally extending passageway therethrough and radially disposed holes of different diameters communicating with one end of the passageway formed in the valve stems. A band surrounds the openings and may be shifted to close all or a part of such holes.

In this context, the main disadvantage of the flow rate limiting valves described above is represented by the impossibility of calibrating the valves as a function of the load which must be manipulated. At present, in effect, the valves cannot be adapted to the load to be manipulated and must be replaced with valves having different shutters in terms of size and number of gaps. Alternatively, the valves must be removed to allow replacement of the preinstalled shutter with another shutter having gaps adequate for the load to be manipulated. Disadvantageously, the operation for replacement of the valve or the shutter results in a loss of time which has a negative impact on productivity of the manipulator.

Sometimes, to overcome the drawback of having to replace the valve or shutter, preference is given to using valves having a shutter which is able to operate with a range of loads, with the drawback that the shutter is, in effect, optimum only for a predetermined load value. Disadvantageously, this circumstance is harmful for the operator's safety, since it is not possible to guarantee an optimum control of the movements of the mechanical arm.

In this context, the technical purpose which forms the basis of this invention is to provide a fluid flow rate limiting valve, in particular for manipulators, which overcomes the above mentioned drawbacks of the prior art. More specifically, the aim of this invention is to provide a limiting valve which can be calibrated as a function of the load which must be manipulated.

Another aim of this invention is to provide a limiting valve which is compact, that is to say, relatively small.

Another aim of this invention is to provide a limiting valve which can be rapidly installed even on manipulators already on the market.

The technical purpose indicated and the aims specified are substantially achieved by a fluid flow rate limiting valve, in particular for manipulators, comprising the technical features described in one or more of the accompanying claims.

Further features and advantages of this invention are more apparent in the detailed description below, with reference to a preferred, non-limiting embodiment of a fluid flow rate limiting valve, in particular for manipulators, as illustrated in the accompanying drawings, in which:
- Figures 1A and 1B illustrate a limiting valve according to the prior art;
- Figure 1 is an axonometric view of a flow rate limiting valve according to the invention;
- Figure 2 is an axonometric view mainly from the front and in cross section of the valve shown in Figure 1;
- Figure 3 shows a front view in cross section of the valve shown in Figure 1;
- Figure 4 is an axonometric view in cross section of the valve shown in Figure 1, with some parts cut away to better illustrate others;
- Figure 5 is an axonometric view mainly from above of the valve shown in Figure 1, with some parts cut away to better illustrate others;
- Figure 6 is an axonometric view mainly from the front and in cross section of the valve shown in Figure 1, with some parts cut away to better illustrate others;
- Figure 7 is an axonometric view mainly from above and in cross section of the valve shown in Figure 1, with some parts cut away to better illustrate others;
- Figure 8 is an axonometric view mainly from the side and in cross section of the valve shown in Figure 1, with some parts cut away to better illustrate others;

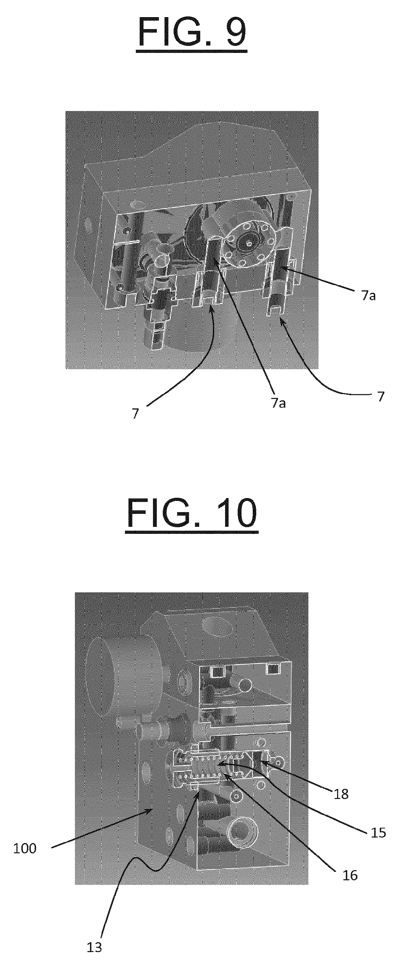

- Figure 9 is an axonometric view mainly from below and in cross section of the valve shown in Figure 1, with some parts cut away to better illustrate others;
- Figure 10 is an axonometric view mainly from the side and in cross section of the valve shown in Figure 1, with some parts cut away to better illustrate others;

With reference to the accompanying drawings, the numeral 1 denotes in its entirety a fluid flow rate limiting valve, in particular for manipulators.

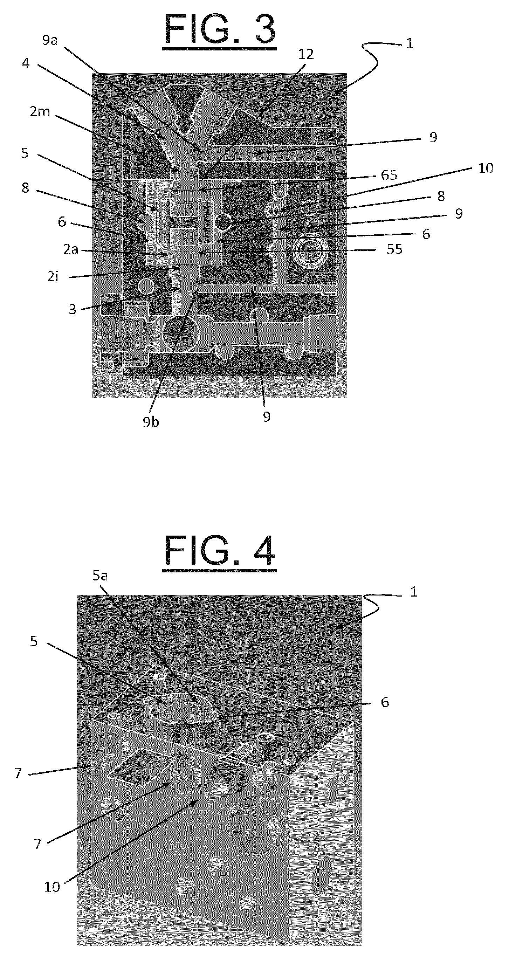

With particular reference to Figures 2 and 3, the limiting valve 1 comprises a chamber 2 defining a main conduit 2a for the passage of an operating fluid, typically air. More in detail, the chamber 2 has an inlet opening 2i and a delivery opening 2m for the fluid. An inlet conduit 3 is connected to the inlet opening 2i of the chamber and a delivery conduit 4 is connected to the delivery opening 2m of the chamber 2. In the preferred embodiment, the inlet conduit 3 is connected to a regulating unit (not illustrated) which sends fluid under pressure to the chamber 2, whilst the delivery conduit 4 is connected to the cylinder of a balancing actuator (of known type and not illustrated). In the example illustrated, the delivery conduit 4 branches in two directions, since there are two balancing actuators. If there is a single balancing actuator, one of the two branches may be closed with a cap (not illustrated), without in any way limiting the scope of the invention.

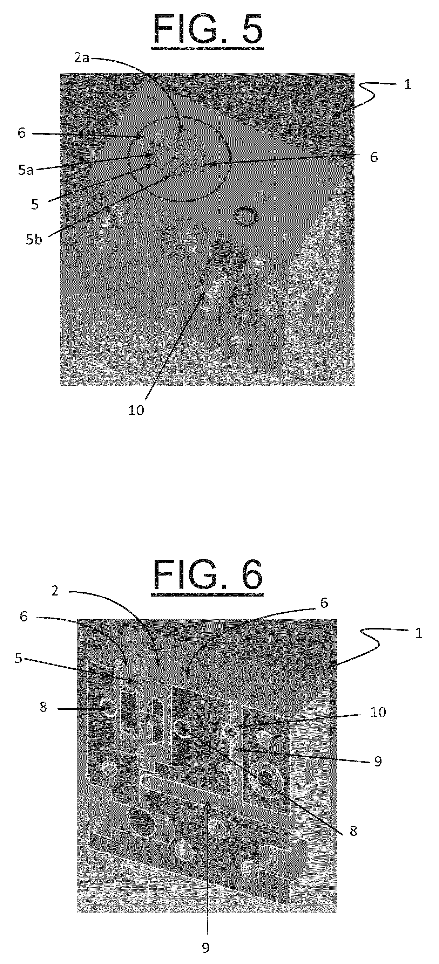

With reference in particular to Figures 3 and 5, the valve 1 comprises a shutter 5 positioned inside the main conduit 2a of the chamber 2 and movable between an operating position for allowing passage of the fluid and an operating position for at least partly obstructing the passage of the fluid towards the delivery opening 2m, in such a way as to limit the fluid flow rate which enters the delivery opening 4.

With particular reference to Figures 3, 4 and 5, the shutter 5 is interposed between a pair of springs 55, 65 which render it floatational inside the main conduit 2a of the chamber 2.

The shutter 5 is immersed in the flow of fluid and is equipped with a plurality of perimeter gaps 5a positioned along the perimeter of the shutter and designed to be passed through by the fluid, in ways which are described in more detail below. The perimeter gaps 5a have a transversal section of predetermined size and there are a predetermined quantity. More specifically, in addition to the perimeter gaps 5a, there is a central gap 5b (Figure 5).

The valve 1 comprises a main by-pass channel 6 forming a fluid communication passage between the inlet conduit 3 and the delivery conduit 4. Preferably, the main by-pass channel 6 extends along a direction substantially alongside a direction of extension of the main conduit 2a. Even more preferably, the main by-pass channel 6 is formed in the chamber 2. More in detail, the main by-pass channel 6 is formed by a groove made on a lateral surface of the chamber 2 in such a way as to form, in transversal cross-section, a lobe.

The main by-pass channel 6, as clearly explained below and illustrated in the drawings, is distinct from the gaps 5a, 5b made on the shutter 5 and is designed to allow or block the passage of fluid irrespective of the operating position adopted by the shutter.

According to a preferred embodiment, the valve 1 comprises a pair of main by-pass channels 6 positioned on opposite sides of the chamber 2. More specifically, the main by-pass channels 6 define, in a transversal cross-section, a pair of lobes diametrically opposite each other along the perimeter of the chamber 2, which - in the example illustrated - has a substantially circular transversal cross-section.

With particular reference to Figures 1 and 4, the valve 1 comprises means 7 for regulating the passage section of the main by-pass channel 6. The regulating means comprise a slider 7a movable in a progressive and preset manner between a narrowing position, corresponding to a complete cut-off of the passage section of the main by-pass channel, and a standby position, corresponding to the complete opening of the main by-pass channel. In a preferred embodiment, the slider comprises a grub screw having an operating portion which intercepts the main by-pass channel 6. More specifically (figures 2, 3 and 6) the grub screw is slidable for screwing/unscrewing inside a blind hole 8 which intersects the main by-pass channel; in this way, following the advance or return of the grub screw, the operating portion of the latter intercepts to a variable extent the main by-pass channel 6, varying the passage section available for the flow of fluid.

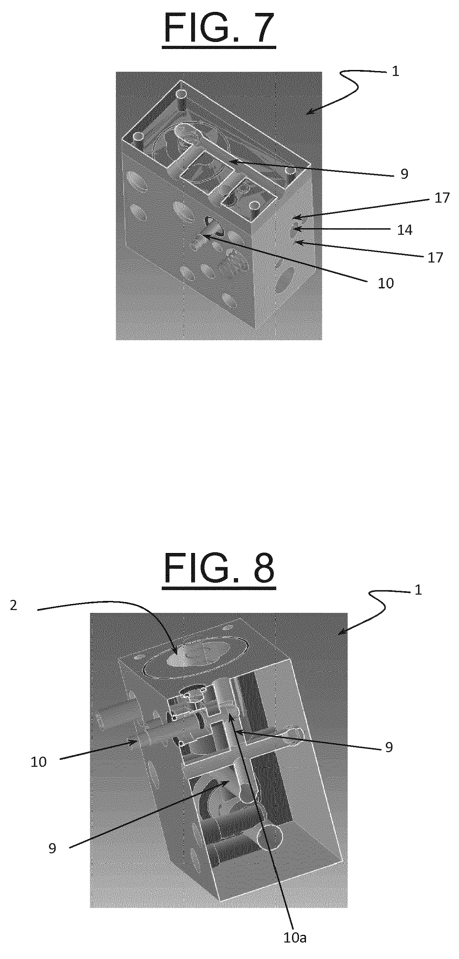

With reference to the drawings, the valve 1 also comprises a secondary by-pass channel 9 forming a further fluid communication passage between the inlet conduit 3 and the delivery conduit 4. In addition, there are further means 10 of adjusting the passage section of the secondary by-pass channel 9. The further adjusting means comprise a slider 10a (Figure 8) movable in a progressive and predetermined manner between a narrowing position, corresponding to a complete cut-off of the passage section of the secondary by-pass channel, and a standby position, corresponding to the complete opening of the secondary by-pass channel.

In the example illustrated (for example in Figure 2), the secondary by-pass channel 9 has ends 9a, 9b (Figure 3) which fit in the inlet conduit 3 and in the delivery conduit 4 outside the chamber 2. More in detail, for reasons which will be explained below, the secondary by-pass channel 9 is shaped in such a way as to not favour the passage of fluid when the shutter 5 is in the consent operating position. More specifically, the secondary by-pass channel 9 is connected to the inlet and delivery conduits with a fitting angle such as to not favour the flow of fluid from the above-mentioned inlet and delivery conduits to the secondary channel if the shutter is in the obstructing operating position. For example, the fitting angle is between 0° and 90°.

Advantageously, the making of the main 6 and secondary 9 by-pass channels and the regulating means 7, 10, and the installation of a pressure guage 11 directly on the box-shaped body 100 of the valve, gives the valve a high degree of compactness.

The invention operates as follows.

In the absence of sudden load movements performed by the manipulator, the fluid flows normally through the perimeter and central gaps 5a, 5b, as well as inside the main by-pass channels 6 and, although in a negligible manner due to the above-mentioned unfavourable fitting angle, also inside the secondary by-pass channel 9. In this configuration, the shutter 5 remains in a position of substantial equilibrium due to the force exerted by the springs 55, 65.

If the operator performs a sudden operation, for example a fast lifting or releasing of the load, the regulating system (of known type) will vary the pressure in the cylinder of the balancing actuator (of known type), quickly sending or discharging fluid into or from the cylinder. The fluid will therefore pass through the gaps at very high speeds, incurring head losses across the shutter 5; these head losses will determine an increase in pressure such as to overcome the force of the springs, moving the shutter in such a way that the perimeter openings 5a close and enter into contact with an inner wall 12 (figura 3) of the chamber 2.

By acting on the means 7 for regulating the passage section of each main by-pass channel 6, it is possible to modify the threshold of the flow rate value - that is to say, of speed of the fluid - which determines the pressure increase that causes the movement of the shutter 5 and, therefore, the closing of the perimeter gaps 5a. More specifically, by modifying the position of the movable slider 7a, the area of the passage section of the fluid in each main by-pass channel 6 is modified; in more detail, the movable slider 7a may adopt two limit positions, one corresponding to the total narrowing of the by-pass channel and one corresponding to the complete opening of the above-mentioned channel. Advantageously, the greater the narrowing of each by-pass channel the lower will be the threshold of the flow rate value which will determine the movement of the shutter 5 and thus the closing the perimeter gaps 5a. In this situation, therefore, the limiting valve will enter into operation with flow rates, and therefore flow speeds, which are low, since the flow of fluid will not find sufficient escape through the main by-pass channel, due to the narrowing. Vice versa, the smaller the narrowing of each by-pass channel the higher will be the threshold of the flow rate value which will determine the movement of the shutter 5 and thus the closing the perimeter gaps 5a. In this situation, therefore, the limiting valve will enter into operation with flow rates, and therefore flow speeds, which are high, since the fluid will find partial escape also through the main by-pass channel.

Advantageously, it should be noted how the presence of the main by-pass channel 6 and the means 7 for regulating its respective passage section make it possible to modify the intervention threshold of the shutter 5 and, therefore, allow the valve 1 to be calibrated as a function of the load which must be manipulated.

After the perimeter openings 5a have closed, making contact with the inner wall 12 of the chamber 2, the central gap 5b, positioned at the delivery opening 2m, remains open and, together with the secondary by-pass channel 9, allows a passage of fluid towards the delivery conduit such as to guarantee a slow movement of the piston of the balancing actuator and, consequently, of the mechanical arm. Advantageously, by acting on the means 10 for regulating the passage section of the secondary by-pass channel 9, it is possible to modify the flow rate value of the fluid flowing in the secondary channel, thus allowing calibration of the speed of movement of the balancing actuator. It should be noted that, under normal operating conditions - that is to say, with the shutter not active - the flow of fluid in the secondary by-pass channel 9 is negligible, due to the fitting angle being unfavourable with the direction of movement of the fluid. Only after limitation of the flow rate towards the delivery opening 2m does the pressure in the chamber 2 become such as to also favour a flow of fluid inside the secondary by-pass channel 9.

In short, the main by-pass channel 6 together with the respective regulating means 7 act like a "rough" control system of the flow rate, determining the threshold of intervention of the shutter, that is to say, the threshold of the flow rate value (or flow speed) at which the shutter activates, thereby limiting the sending of fluid to the delivery conduit 4. Vice versa, the secondary by-pass channel 9 together with the respective regulating means 10 act like a "fine" control system of the flow rate, determining the flow rate value (or flow speed) to impose after the intervention of the shutter.

It should be noted that the shutter 5 returns to a central neutral position when the pressure of the fluid in the inlet conduit 3 adopts a value close to that of the pressure in the delivery conduit 4; in that case, in effect, as the pressure difference which would lead to a thrust on the shutter 5 is substantially zero, the springs 201, 202 perform their return force and, therefore, return the shutter 5 to a central position of equilibrium. Advantageously, the valve 1 also comprises a calibration system 13 to limit the load which can be lifted by the manipulator. More specifically, the calibration system comprises a discharge opening 14 (shown in Figure 7) which places a discharge conduit 15 in fluid communication with the outside. Still more advantageously, the calibration system 13 is made directly on the box-shaped body 100 of the valve 1, which is, therefore, extremely compact. Inside the discharge conduit there is a plug 18 movable between a closed position and an open position of the discharge opening 14, the plug being kept in position by a spring 16. More specifically, the spring 16 has an elastic constant selected as a function of the maximum load that must be manipulated. The calibration system 13 enters into operation in the presence of an overload of the manipulator. More specifically, in the presence of an excessive load, the operating fluid present in the cylinder of the manipulator considerably increases its pressure, overcoming the force of the spring 16 and causing a movement of the plug 18, which thus frees the discharge opening 14, favouring the venting of fluid.

According to the preferred variant embodiment, the discharge opening 14 may be closed with a plate (not illustrated) kept in position by a pair of screws (not illustrated) designed to engage in corresponding holes 17 (Figure 7). Advantageously, the possibility of closing the discharge opening 14 with a plate allows the testing of the manipulator also in overload, without the need to replace any component of the calibration system, unlike the prior art, in which it is necessary to replace valve bodies, with a consequent waste of time and machine stoppage. In effect, given that the aim of the calibration system is to prevent the overloading of the manipulator, the testing of the latter according to the prior art may only be performed after a suitable replacement of the valve body installed in the factory. It has been found in practice that the limiting valve according to this invention achieves the preset aims. In effect, thanks to the presence of the main 6 and secondary 9 by-pass channel and the means 7, 10 for regulating their respective passage sections, it is possible to calibrate the operation of the valve according to the load which must be manipulated. Advantageously, this circumstance avoids the need to replace the valve or the shutter following variations of the load to be manipulated, with a significant saving in time and, therefore, a significant increase in productivity. Still more advantageously, a limiting valve in accordance with the invention can guarantee a high level of safety for the operator, since it ensures optimum control of the movements of the mechanical arm.

Advantageously, a limiting valve according to the invention, as it is compact, is fast to install even on manipulators already on the market.

## Claims

1. A fluid flow rate limiting valve (1), in particular for manipulators, comprising:
- a chamber (2) defining a main conduit (2a) for the passage of an operating fluid, the chamber (2) having an inlet opening (2i) and a delivery opening (2m) for the fluid;
- an inlet conduit (3) connected to the inlet opening (2i) of the chamber (2);
- a delivery conduit (4) connected to the delivery opening (2m) of the chamber (2);
- a shutter (5) positioned inside the main conduit (2a) of the chamber (2) and movable between an operating position for allowing passage of the fluid and an operating position for at least partly obstructing the passage of the fluid towards the delivery opening (2m), in such a way as to limit the fluid flow rate in the delivery opening (2m), the shutter having a plurality of gaps (5a, 5b) for passage of the fluid,
**characterised in that** it comprises:
- at least one main by-pass channel (6) separate from the gaps (5a, 5b) present on the shutter (5), the by-pass channel (6) forming a fluid communication passage between the inlet conduit (3) and the delivery conduit (4);
- means (7) for adjusting the passage section of the main by-pass channel (6), the main by-pass channel (6) allowing or blocking the passage of fluid irrespective of the operating position of the shutter (5).

2. The valve (1) according to claim 1, wherein the main by-pass channel (6) extends along a direction substantially along a direction of extension of the main conduit (2a).

3. The valve (1) according to any one of the preceding claims, wherein the main by-pass channel (6) is defined by the chamber (2).

4. The valve (1) according to any one of the preceding claims, wherein the main by-pass channel (6) is a groove made on a lateral surface of the chamber (2) in such a way as to define, in transversal section, a lobe.

5. The valve (1) according to any one of the preceding claims, comprising a pair of main by-pass channels (6) positioned on opposite sides of the chamber (2).

6. The valve (1) according to any one of the preceding claims, also comprising:
- a secondary by-pass channel (9) forming a further fluid communication passage between the inlet conduit (3) and the delivery conduit (4);
- further means (10) for adjusting the passage section of the secondary by-pass channel (9),
the secondary by-pass channel (9) being shaped in such a way as to not favour the passage of fluid when the shutter (5) is in the consent operating position.

7. The valve (1) according to claim 6, wherein the secondary by-pass channel (9) has ends (9a, 9b) which fit in the inlet conduit (3) and in the delivery conduit (4) outside the chamber, the secondary by-pass channel (9) being connected to the inlet conduit (3) and the delivery conduit (4) with a fitting angle such as to not favour the flow of fluid from the above-mentioned inlet conduit (3) and delivery conduit (4) to the secondary channel, when the shutter (5) is in the consent position.

8. The valve (1) according to claim 6 or 7, wherein the further means (10) of adjusting the passage section of the secondary by-pass channel (9) comprise a slider (10a) movable in a progressive and predetermined manner between a narrowing position, corresponding to a complete cut-off of the passage section of the secondary by-pass channel (9), and a standby position, corresponding to the complete opening of the secondary by-pass channel (9).

9. The valve (1) according to any one of the preceding claims, wherein the means (7) of adjusting the passage section of the main by-pass channel (6) comprise a slider (7a) movable in a progressive and predetermined manner between a narrowing position, corresponding to a complete cut-off of the passage section of the main by-pass channel (6), and a standby position, corresponding to the complete opening of the main by-pass channel (6).

10. The valve according to any one of the preceding claims, also comprising a calibration system (13) for limiting the load which can be lifted by the manipulator, the calibration system comprising:
- a discharge conduit (15) made on a box-shaped body (100) of the valve (1);
- a discharge opening (14) which places the discharge conduit (15) in fluid communication with the outside;
- a plug (18) positioned inside the discharge conduit (15) and movable between a closed position and an open position of the discharge opening (14), the plug being kept in position by a spring (16).

11. A manipulator of objects in space, **characterised in that** it comprises a fluid flow rate limiting valve according to any one of the preceding claims.

## Patentansprüche

1. Volumenstromregler (1) insbesondere für Manipulatoren, umfassend:
- eine Kammer (2), die eine Hauptleitung (2a) für das Durchströmen eines Prozessmediums definiert, wobei die Kammer (2) eine Einlassöffnung (2i) und eine Auslassöffnung (2m) für das Medium aufweist;
- eine Einlassleitung (3), die mit der Einlassöffnung (2i) der Kammer (2) verbunden ist;
- eine Auslassleitung (4), die mit der Auslassöffnung (2m) der Kammer (2) verbunden ist;
- eine Absperrklappe (5), die in der Hauptleitung (2a) der Kammer (2) positioniert und zwischen einer Betriebsposition, um das Durchströmen des Mediums zu erlauben, und einer Betriebsposition, um zumindest teilweise das Durchströmen des Mediums zur Auslassöffnung (2a) zu versperren (2m) bewegbar ist, sodass der Volumenstrom in der Auslassöffnung (2m) begrenzt wird, wobei die Absperrklappe eine Vielzahl an Aussparungen (5a, 5b) für das Durchströmen des Mediums aufweist, **dadurch gekennzeichnet, dass** er umfasst:
- mindestens einen Hauptumleitungskanal (6), der von den Aussparungen (5a, 5b) an der Absperrklappe (5) getrennt ist, wobei der Umleitungskanal (6) einen Fluidkommunikationsdurchgang zwischen der Einlassleitung (3) und der Auslassleitung (4) bildet;
- Mittel (7) zum Verstellen des Durchgangsbereichs des Hauptumleitungskanals (6), wobei der Hauptumleitungskanal (6) das Durchströmen des Mediums erlaubt oder blockiert, ungeachtet der Betriebsposition der Absperrklappe (5).

2. Regler (1) nach Anspruch 1, wobei sich der Hauptumleitungskanal (6) entlang einer Richtung erstreckt, die im Wesentlichen entlang einer Ausdehnungsrichtung der Hauptleitung (2a) verläuft.

3. Regler (1) nach einem der vorhergehenden Ansprüche, wobei der Hauptumleitungskanal (6) durch die Kammer (2) definiert ist.

4. Regler (1) nach einem der vorhergehenden Ansprüche, wobei es sich beim Hauptumleitungskanal (6) um eine Rille handelt, die auf einer seitlichen Oberfläche der Kammer (2) so ausgebildet ist, dass sie im Querschnitt einen Flügel definiert.

5. Regler (1) nach einem der vorhergehenden Ansprüche, umfassend ein Paar Hauptumleitungskanäle (6), die an entgegengesetzten Seiten der Kammer (2) positioniert sind.

6. Regler (1) nach einem der vorhergehenden Ansprüche, zudem umfassend:
- einen Hilfsumleitungskanal (9), der einen weiteren Fluidkommunikationsdurchgang zwischen der Einlassleitung (3) und der Auslassleitung (4) bildet;
- weitere Mittel (10) zum Verstellen des Durchgangsbereichs des Hilfsumleitungskanals (9), wobei der Hilfsumleitungskanal (9) so ausgebildet ist, dass er das Durchströmen des Mediums nicht fördert, wenn sich die Absperrklappe (5) in der entsprechenden Betriebsposition befindet.

7. Regler (1) nach Anspruch 6, wobei der Hilfsumleitungskanal (9) Enden (9a, 9b) aufweist, die in die Einlassleitung (3) und in die Auslassleitung (4) außerhalb der Kammer eingepasst werden, wobei der Hilfsumleitungskanal (9) mit der Einlassleitung (3) und der Auslassleitung (4) mit einem Befestigungswinkel verbunden ist, sodass die Strömung des Mediums von der genannten Einlassleitung (3) und der Auslassleitung (4) zum Hilfskanal nicht gefördert wird, wenn sich die Absperrkammer (5) in der entsprechenden Position befindet.

8. Regler (1) nach Anspruch 6 oder 7, wobei die weiteren Mittel (10) zum Verstellen des Durchgangsbereichs des Hilfsumleitungskanals (9) einen Schieber (10a) umfassen, der auf progressive und vorgegebene Weise zwischen einer sich verschmälernden Position, entsprechend einer kompletten Absperrung des Durchgangsbereichs des Hilfsumleitungskanals (9) und einer Standby-Position, entsprechend der kompletten Öffnung des
Hilfsumleitungskanals (9), bewegbar ist.

9. Regler (1) nach einem der vorhergehenden Ansprüche, wobei die Mittel (7) zum Verstellen des Durchgangsbereichs des Hauptumleitungskanals (6) einen Schieber (7a) umfassen, der auf progressive und vorgegebene Weise zwischen einer sich verschmälernden Position, entsprechend einer kompletten Absperrung des Durchgangsbereichs des Hauptumleitungskanals (6) und einer Standby-Position, entsprechend der kompletten Öffnung des Hauptumleitungskanals (6), bewegbar ist.

10. Regler nach einem der vorhergehenden Ansprüche, zudem umfassend ein Kalibrierungssystem (13), um die Last zu begrenzen, die vom Manipulator gehoben werden kann, wobei das Kalibrierungssystem umfasst:
- eine Ablassleitung (15), ausgebildet auf einem kastenförmigen Körper (100) des Reglers (1);
- eine Ablassöffnung (14), die die Ablassöffnung (15) mit der Außenseite in Fluidkommunikation setzt;
- einen Stopfen (18), der in der Ablassleitung (15) positioniert und zwischen einer geschlossenen Position und einer offenen Position der Ablassöffnung (14) bewegbar ist, wobei der Stopfen von einer Feder (16) in Position gehalten wird.

11. Manipulator für Gegenstände im Raum, **dadurch gekennzeichnet, dass** er einen Volumenstromregler gemäß einem der vorhergehenden Ansprüche umfasst.

## Revendications

1. Soupape de limitation de débit de fluide (1), en particulier pour des manipulateurs, comprenant :
- une chambre (2) définissant un conduit principal (2a) pour le passage d'un fluide de commande, la chambre (2) ayant une ouverture d'entrée (2i) et une ouverture d'évacuation (2m) pour le fluide ;
- un conduit d'entrée (3) relié à l'ouverture d'entrée (2i) de la chambre (2) ;
- un conduit d'évacuation (4) relié à l'ouverture d'évacuation (2m) de la chambre (2) ;
- un obturateur (5) positionné à l'intérieur du conduit principal (2a) de la chambre (2) et mobile entre une position fonctionnelle pour permettre le passage du fluide et une position fonctionnelle pour au moins partiellement obstruer le passage du fluide vers l'ouverture d'évacuation (2m) de manière à limiter le débit de fluide dans l'ouverture d'évacuation (2m), l'obturateur ayant une pluralité d'écartements (5a, 5b) pour le passage du fluide, **caractérisée en ce qu'**elle comporte :
- au moins un conduit de dérivation principal (6) séparé des écartements (5a, 5b) présents sur l'obturateur (5), le conduit de dérivation (6) formant un passage à communication fluidique entre le conduit d'entrée (3) et le conduit d'évacuation (4) ;
- des moyens (7) servant à régler la section de passage du conduit de dérivation principal (6), le conduit de dérivation principal (6) permettant ou bloquant le passage du fluide indépendamment de la position fonctionnelle de l'obturateur (5).

2. Soupape (1) selon la revendication 1, dans laquelle le conduit de dérivation principal (6) se prolonge le long d'une direction substantiellement le long d'une direction d'extension du conduit principal (2a).

3. Soupape (1) selon l'une quelconque des revendications précédentes, dans laquelle le conduit de dérivation principal (6) est défini par la chambre (2).

4. Soupape (1) selon l'une quelconque des revendications précédentes, dans laquelle le conduit de dérivation principal (6) est une rainure réalisée sur une surface latérale de la chambre (2) de manière à définir, en section transversale, un lobe.

5. Soupape (1) selon l'une quelconque des revendications précédentes, comprenant une paire de conduits de dérivation principaux (6) positionnés sur des côtés opposés de la chambre (2).

6. Soupape (1) selon l'une quelconque des revendications précédentes, comprenant de plus :
- un conduit de dérivation secondaire (9) formant un passage à communication fluidique supplémentaire entre le conduit d'entrée (3) et le conduit d'évacuation (4) ;
- des moyens supplémentaires (10) servant à régler la section de passage du conduit de dérivation secondaire (9), le conduit de dérivation secondaire (9) ayant une forme lui permettant de ne pas faciliter le passage du fluide lorsque l'obturateur (5) se trouve dans la position fonctionnelle autorisée.

7. Soupape (1) selon la revendication 6, dans laquelle le conduit de dérivation secondaire (9) possède des extrémités (9a, 9b) s'adaptant au conduit d'entrée (3) et au conduit d'évacuation (4) à l'extérieur de la chambre, le conduit de dérivation secondaire (9) étant relié au conduit d'entrée (3) et au conduit d'évacuation (4) avec un angle d'installation faisant en sorte de ne pas faciliter l'écoulement de fluide des conduit d'entrée (3) et d'évacuation (4) susmentionnés au conduit secondaire lorsque l'obturateur (5) se trouve dans la position autorisée.

8. Soupape (1) selon la revendication 6 ou 7, dans laquelle les moyens supplémentaires (10) de réglage de la section de passage du conduit de dérivation secondaire (9) comportent un coulisseau (10a) mobile d'une façon progressive et prédéfinie entre une position de rapprochement, correspondant à une coupure complète de la section de passage du conduit de dérivation secondaire (9), et une position d'attente, correspondant à l'ouverture complète du conduit de dérivation secondaire (9).

9. Soupape (1) selon l'une quelconque des revendications précédentes, dans laquelle les moyens (7) de réglage de la section de passage du conduit de dérivation principal (6) comportent un coulisseau (7a) mobile d'une façon progressive et prédéfinie entre une position de rapprochement, correspondant à une coupure complète de la section de passage du conduit de dérivation principal (6), et une position d'attente, correspondant à l'ouverture complète du conduit de dérivation principal (6).

10. Soupape selon l'une quelconque des revendications précédentes, comprenant de plus un système de calibrage (13) servant à limiter la charge pouvant être soulevée par le manipulateur, le système de calibrage comprenant :
- un conduit de décharge (15) réalisé sur un corps en forme de boîtier (100) de la soupape (1) ;
- une ouverture de décharge (14) mettant le conduit de décharge (15) en communication fluidique avec l'extérieur ;
- un bouchon (18) positionné à l'intérieur du conduit de décharge (15) et mobile entre une position fermée et une position ouverte de l'ouverture de décharge (14), le bouchon étant maintenu en position par un ressort (16).

11. Manipulateur d'objets dans l'espace, **caractérisé en ce qu'**il comporte une soupape de limitation de débit de fluide selon l'une quelconque des revendications précédentes.
